# EUROPEAN PATENT SPECIFICATION

(11) **EP 3 319 848 B1**
(45) Date of publication and mention of the grant of the patent: **09.10.2019**
(21) Application number: 16741689.0
(22) Date of filing: 08.07.2016
(51) Int. Cl.: B60T 11/10, B60T 15/04, B60T 13/22

(54) **ACTUATING DEVICE OF A VALVE FOR THE BRAKING OF A TRAILER**
BETÄTIGUNGSVORRICHTUNG EINES VENTILS ZUM BREMSEN EINES ANHÄNGERS
DISPOSITIF D'ACTIONNEMENT D'UNE VANNE POUR LE FREINAGE D'UNE REMORQUE

(30) Priority: 08.07.2015 IT UB20152034
(43) Date of publication of application: 16.05.2018
(73) Proprietor: SAFIM S.p.A., 41123 Modena (IT)
(72) Inventor: MAMEI, Eronne, 41123 Modena (IT); MAMEI, Enrico, 41123 Modena (IT); MAMEI, Andrea, 41123 Modena (IT)
(74) Representative: Zoli, Filippo
(86) International application number: PCT/IB2016/054106
(87) International publication number: WO 2017/006288

(56) References cited:
- EP-A1- 2 876 009
- EP-A1- 3 064 408
- CN-U- 201 685 807
- CN-U- 201 980 221

## Description

### Technical Field

The present invention relates to an actuating device of a valve for the braking of a trailer.

### Background Art

Document EP 2 876 009 A1 discloses an actuating device of a valve suitable for the braking of a trailer.

Some recently introduced standards establish that between a towing vehicle and its trailer must be placed a connecting device having a pair of male joints adapted to be inserted inside a pair of relative female joints.

In particular, the female joints are connectable to a control line adapted to supply the braking system of the trailer and to an additional line, respectively, adapted to disable the automatic and/or parking brake of the trailer itself.

As the technician skilled in the art knows, the braking phases of a vehicle are generally three, i.e. the service braking, which occurs under regular operating conditions of the vehicle itself, the parking braking, i.e. when the vehicle is stationary in the same position, and the emergency braking.

These standards also establish that, for agricultural tractors with hydraulic braking of the trailer, during the emergency braking of the towing vehicle the trailer's service braking is also activated, so as to have a gradual braking of the same and that the parking braking is activated following the operation of the parking brake of the towing vehicle.

It follows therefore, that when the operator actuates the brake pedal of the prime mover, he/she intervenes on the wheels of same and, by means of a braking valve (called brake-trailer valve), also on the trailer's braking system.

Generally, for towing vehicles capable of reaching speeds above 40 km/h, the operation of the automatic and/or parking brake of the trailer occurs by resetting the pressure along the additional line.

On towing vehicles traveling at a speed below 40 km/h the pressure can also be reset along the additional line following the operation of the emergency brake of the towing vehicle.

In particular in the latter case, the towing vehicle and the trailer can be difficult to drive since the braking of the trailer turns out to be of the on-off type and, therefore, too abrupt for the accuracy required under certain conditions.

Some of known towing vehicles envisage the use of a device for actuating the relative parking or emergency brake of the spring type, also called SAHR (Spring Apply Hydraulic Release). The devices of this type envisage one or more springs for the actuation of the parking or emergency brake of the towing vehicle, in contrast to which one or more hydraulic or pneumatic cylinders are activated. As the technician skilled in the art knows, when these cylinders do not exert any force the action of the springs is maximum as well as the braking action, while when they exert a force greater than that of the springs, the brakes are free and when they exert a modulated force in opposition to the springs, the brakes are actuated with a variable force according to the resultant forces.

### Description of the Invention

The main aim of the present invention is to provide a device which allows to actuate the service braking of the trailer following the activation of the emergency brake of the towing vehicle, and which at the same time allows, in parking condition, to maintain active the parking brake of the trailer itself, thus avoiding that the relative hydraulic circuit remains under pressure.

Within this aim, one object of the present invention is to provide a device which allows to control the braking of the trailer according to the SAHR pressure applied to the relative towing vehicle and to the pressure that supplies the additional line of the trailer.

Another object of the present invention is to provide an actuating device of a valve for the braking of a trailer which allows to overcome the mentioned drawbacks of the prior art within the ambit of a simple, rational, easy, effective to use and affordable solution.

The above mentioned objects are achieved by this actuating device of a valve for the braking of a trailer according to claim 1.

### Brief Description of the Drawings

Other characteristics and advantages of the present invention will become better evident from the description of a preferred, but not exclusive, embodiment of an actuating device of a valve for the braking of a trailer, illustrated by way of an indicative, but non-limiting, example in the accompanying drawings in which:

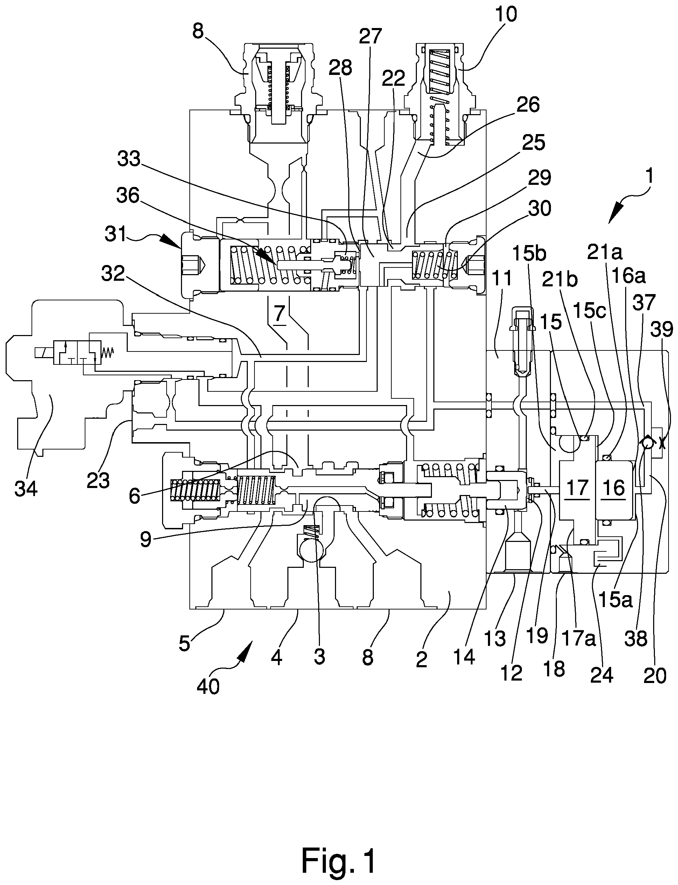

Figure 1 is a sectional view of a device according to the invention applied to a valve for the braking of a trailer.

### Embodiments of the Invention

With particular reference to such illustrations, globally indicated with reference number 1 is an actuating device of a valve 40 for the braking of a trailer.

The valve 40 comprises at least a base body 2 having at least a main seat 3 communicating with at least a main port 4 and a secondary port 23 connectable to a source of a work fluid at a first and at a second pressure value respectively, with a discharge port 5 connectable to a discharge tank, with a control port 6 communicating with a control line 7 connectable to a first male joint 8 of the towing vehicle and with an additional port 25 communicating with an additional line 26 connectable to a second male joint 10 of the towing vehicle. The first and the second male joint 8 and 10 are in turn connectable to the braking system of the trailer and to the automatic and/or parking brake of the same, respectively.

In a particular embodiment, the secondary port 23 can be defined internally to the valve 40; in other words, the valve 40 has just one port communicating with the outside, i.e. the main port 4, from which a branch line extends having a constriction downstream of which the secondary port 23 is defined.

Inside the main seat 3 is slidably accommodated at least one distributor 9 movable between a rest position and a braking position.

In the embodiment represented in the figure, inside the base body 2 is formed, in addition to the main seat 3, also an auxiliary seat 22.

In particular, the main seat 3 is communicating with the main port 4, with the discharge port 5 and with the control port 6 and the auxiliary seat 22 is communicating with the secondary port 23, with the discharge port 5 and with the additional port 25.

The distributor 9 accommodated inside the main seat 3 is movable between at least a rest position, wherein the control port 6 is placed in communication with the discharge port 5, and at least a braking position, wherein the main port 4 is placed in communication with the control port 6.

Inside the auxiliary seat 22 is instead accommodated sliding at least an auxiliary distributor 27 movable between a regular operation position, wherein the additional port 25 is placed in communication with the secondary port 23, and an emergency position, wherein the additional port 25 is placed in communication with the discharge port 5.

The valve 40 then comprises command means 31 for the displacement of the auxiliary distributor 27 from the regular operation position to the emergency position.

On the auxiliary distributor 27 act, on opposite sides, a thrust chamber 28 and a contrast chamber 29, where inside the latter are accommodated elastic means 30 adapted to push the second distributor element itself towards the emergency position.

The command means 31 comprise at least one command channel 32, 33 communicating with the thrust chamber 28, connectable to the secondary port 23 and to the discharge port 5, and valve means 34, 36, 9 operable at least to place in communication the command channel 32, 33 with the discharge port 5 so as to permit the displacement of the auxiliary distributor 27 to the emergency position.

For a detailed description of the valve 40 reference is made to the content of patent EP3064408 A1, published after the priority date of this patent application, filed by the same applicant.

The application of the device 1 to different brake-trailer valves with respect to that described above cannot however be ruled out.

According to the invention, the device comprises at least one driving body 11 in which are defined at least a driving chamber 12 having at least a braking gap 13, connectable to the braking system of the towing vehicle, and inside which is slidably accommodated at least one driving element 14.

The driving element 14 is movable between a rest configuration, wherein it does not interact with the distributor 9, and a driving configuration, wherein it interacts with the distributor 9 to displace it from the relative rest position to a braking position.

In particular, as a result of its displacement from the rest configuration to the driving configuration, e.g. by effect of the increase in pressure inside the driving chamber 12, the driving element 14 contacts the distributor 9 to push it from the rest position towards a braking position.

The device 1 comprises, therefore, at least an actuating seat 15 inside which is accommodated sealingly sliding at least one piston 16, 17 delimiting, inside the actuating seat itself, at least a first and a second chamber 15a and 15b.

The first chamber 15a is communicating with at least an additional gap 20 connectable to the secondary port 23 and acts on a first face 16a of the piston itself, while the second chamber 15b is communicating with at least a driving gap 18 connectable to a control device of the parking and/or emergency brake of the towing vehicle (not shown in the figures) and acts on a second face 17a of the piston 16, 17 opposite the first face 16a.

More in detail, inside the driving body 11 a channel 37 is formed communicating with the additional gap 20 and connectable with the secondary port 23, along which is arranged a one-way valve 38 adapted to allow the passage of the work fluid only towards the first chamber 15a, and a constriction 39, arranged parallel to the one-way valve 38 and adapted to slow down the outflow of the work fluid at output from the first chamber 15a.

In particular, the control device of the parking or emergency brake of the towing vehicle is of the spring type (SAHR).

Between the piston 16, 17 and the driving element 14 is placed at least a rod 19 adapted to transmit the displacement of the piston 16, 17 to the driving element itself. The piston 16, 17 is therefore adapted to push the driving element 14 from its rest position to the driving position by means of the rod 19 when the force acting on the first face 16a is greater than that acting on the second face 17a.

In a particular embodiment, not represented in the figures, the rod 19 is linked together, e.g. by means of an interlocking connection, to the piston 16, 17. Advantageously, the second chamber 15b is placed between the first chamber 15a and the driving chamber 12 and the rod 19 is placed between the second face 17a and the driving element 14.

Preferably, the first face 16a has an area different to the second face 17a. More in particular, the areas of the faces 16a and 17a are dimensioned depending on the pressures present at the additional gap 20 and the driving gap 18, i.e. on the pressure present in the secondary port 23 and on that characterizing the control device of the parking or emergency brake of the towing vehicle.

In the embodiment represented in Figure 1 the first face 16a has a larger area than the second face 17a.

In an alternative embodiment, not represented in the figures, the device 1 comprises elastic return means acting on the second face 17a and adapted to push the piston 16, 17 away from the driving element 14. More particularly, the elastic return means, e.g. of the type of a spring, are adapted to push the piston 16,17 in contrast to the force acting on the first face 16a. More particularly, in this embodiment, the first face 16a has substantially the same area of the second face 17a.

The piston 16,17 is movable between a stationary configuration, wherein the pressures acting on the first and on the second face 16a and 17a are substantially null, a regular operation configuration, wherein the force acting on the second face 17a is greater than that acting on the first face 16a and the piston itself moves away from the rod 19 with respect to the stationary configuration, and an emergency configuration, wherein the force acting on the first face 16a is greater than that acting on the second face 17a and the piston itself pushes the driving element 14 to a driving position by means of the rod 19.

The parking configuration corresponds to the condition in which the parking or emergency brake of the towing vehicle and the automatic and/or parking brake of the trailer are activated, and in which the pressure in the driving gap 18 and in the additional gap 20 are substantially null. Under this operation condition, in fact, the pressure exerted by the control device of the parking or emergency brake of the towing vehicle to counteract the action of the springs is substantially equal to zero, as well as the pressure present in the additional line of the trailer.

The regular operation configuration, on the other hand, corresponds to the condition in which both the towing vehicle and the trailer are in motion and in which, therefore, both the driving gap 18 and the additional gap 20 are pressurized. In this condition, in fact, both the control device of the parking or emergency brake of the towing vehicle and the additional line 26 of the trailer are pressurized to maintain the respective brakes deactivated. The diameter of the rod 19 is selected in such a way that the force acting on it is of no consequence and, in any case, counteractable with an appropriately stiff spring. The emergency configuration corresponds to the operation condition wherein the parking or emergency brake of the towing vehicle is activated, as a result of which the pressure in the driving gap 18 decreases since the counteracting action decreases to the springs that activate the brake itself, with respect to the regular operation configuration, and the piston 16, 17 moves towards the driving element 14 by pushing it through the rod 19 towards a driving configuration. The trailer braking pressure controlled by the distributor 9 will be greater the smaller the pressure in the driving gap 18.

In the aforementioned embodiment, wherein elastic return means are provided, the position taken by the piston 16, 17 in the stationary configuration substantially corresponds to that taken by the piston itself in the regular operation configuration.

In the preferred embodiment shown in the figures, the piston 16, 17 comprises at least a first piston 16 defining the first face 16a and at least a second piston 17 defining the second face 17a, where the first and the second piston 16 and 17 are distinct and arranged resting the one against the other.

More in particular, between the pistons 16 and 17 and the driving body 11 are placed at least a first and a second sealing element 21a and 21b, respectively, adapted to isolate in a fluid-operated manner the respective chambers 15a and 15b from one another.

Conveniently, between the first and the second chamber 15a and 15b is placed at least a further chamber 15c communicating with a discharge tank 24.

It has in practice been observed that the described invention achieves the intended objects and in particular the fact is stressed that the device to which the present invention relates, allows to adjust the service braking of the trailer depending on the pressure present in the additional line of the trailer itself and on the SAHR pressure and, at the same time, it allows to maintain active the parking brake of the trailer thus avoiding the relative hydraulic system remains pressurized.

## Claims

1. Actuating device (1) of a valve (40) for the braking of a trailer of the type comprising a base body (2) having at least a main seat (3) communicating with at least a main port (4) and a secondary port (23) connectable to a source of a work fluid at a first and at a second pressure signal respectively; a discharge port (5) connectable to a discharge tank; a control port (6) communicating with a control line (7) connectable to the braking system of the towing vehicle; an additional port (25) communicating with an additional line (26) connectable to the automatic and/or parking brake of the trailer; inside said main seat (3) being slidably accommodated at least one distributor (9) movable between at least a rest position and at least a braking position; **characterized in that** it comprises at least a driving body (11) in which are defined:
- at least a driving chamber (12) having at least a braking gap (13) connectable to the braking system of a towing vehicle and inside which is slidably accommodated at least one driving element (14) movable between a rest configuration and a driving configuration wherein it interacts with said distributor (9) to displace it from the rest position to the braking one;
- at least an actuating seat (15) inside which is accommodated sealingly sliding at least one piston (16, 17) delimiting at least a first chamber (15a), communicating with at least an additional gap (20) connectable to said secondary port (23) and acting on a first face (16a) of the piston itself, and at least a second chamber (15b), communicating with at least a driving gap (18) connectable to a control device of the parking and/or emergency brake of the towing vehicle and acting on a second face (17a) of said piston (16, 17) opposite said first face (16a);
and **in that** it comprises at least a connecting rod (19) placed between said piston (16, 17) and said driving element (14), said piston (16, 17) being able to push said driving element (14) from its rest configuration to the driving configuration by means of said rod (19) when the force acting on said first face (16a) is greater than that acting on said second face (17a).

2. Device (1) according to claim 1, **characterized in that** said at least one piston (16, 17) is movable between a stationary configuration, wherein the pressures acting on said first and second face (16a, 17a) are substantially null, a regular operation configuration, wherein the force acting on said second face (17a) is greater than that acting on said first face (16a) and the piston itself moves away from said rod (19) with respect to the stationary configuration, and an emergency configuration, wherein the force acting on said first face (16a) is greater than that acting on said second face (17a) and the piston itself pushes said driving element (14) to a driving position by means of said rod (19).

3. Device (1) according to claim 1 or 2, **characterized in that** said second chamber (15b) is placed between said first chamber (15a) and said driving chamber (12) and that said rod (19) is placed between said second face (17a) and said driving element (14).

4. Device (1) according to one or more of the preceding claims, **characterized in that** said first face (16a) has an area different to said second face (17a).

5. Device (1) according to one or more of the preceding claims, **characterized in that** it comprises elastic return means acting on said second face (17a) and able to push said piston (16, 17) away from said rod (19).

6. Device (1) according to one or more of claims 1 to 3 and claim 5, **characterized in that** the area of said first face (16a) substantially corresponds to the area of said second face (17a).

7. Device (1) according to claim 6, **characterized in that** the position taken by said piston (16, 17) in said stationary configuration substantially corresponds to that taken in said regular operation configuration.

8. Device (1) according to one or more of the preceding claims, **characterized in that** said rod (19) is linked together with said piston (16, 17).

9. Device (1) according to one or more of the preceding claims, **characterized in that** said at least one piston (16, 17) comprises at least a first piston (16) defining said first face (16a) and at least a second piston (17) defining said second face (17a), said first and second piston (16, 17) being distinct and arranged resting the one against the other.

10. Device (1) according to claim 5, **characterized in that** it comprises at least a further chamber (15c), placed between said first and said second chamber (15a, 15b) and communicating with a discharge tank (24).

## Patentansprüche

1. Betätigungsvorrichtung (1) eines Ventils (40) zum Bremsen eines Anhängers des Typs umfassend einen Grundkörper (2) mit mindestens einem Hauptsitz (3), der mit mindestens einem Hauptanschluss (4) und einem sekundären Anschluss (23) in Verbindung steht, der mit einer Quelle eines Arbeitsfluids bei einem ersten bzw. einem zweiten Drucksignal verbunden werden kann; einen Auslassanschluss (5), der mit einem Auslasstank verbunden werden kann; einen Steueranschluss (6), der mit einer Steuerleitung (7) in Verbindung steht, die mit dem Bremssystem des Zugfahrzeugs verbunden werden kann; ein zusätzlicher Anschluss (25), der mit einer zusätzlichen Leitung (26) in Verbindung steht, die mit der automatischen und/oder Feststellbremse des Anhängers verbunden werden kann; wobei innerhalb des Hauptsitzes (3) mindestens ein Verteiler (9) verschiebbar untergebracht ist, der zwischen mindestens einer Ruheposition und mindestens einer Bremsposition beweglich ist; **dadurch gekennzeichnet, dass** er mindestens einen Antriebskörper (11) umfasst, in dem definiert sind:
- mindestens eine Antriebskammer (12) mit mindestens einem Bremsspalt (13), der mit dem Bremssystem eines Zugfahrzeugs verbunden werden kann und in dem mindestens ein Antriebselement (14) verschiebbar untergebracht ist, das zwischen einer Ruhekonfiguration und einer Antriebskonfiguration beweglich ist, wobei es mit dem Verteiler (9) zusammenwirkt, um ihn aus der Ruheposition in die Bremsposition zu verschieben;
- mindestens einen Betätigungssitz (15), in dem mindestens ein Kolben (16, 17) abdichtend gleitend aufgenommen ist, der mindestens eine erste Kammer (15a) begrenzt und mit mindestens einem zusätzlichen Spalt (20) in Verbindung steht, der mit dem sekundären Anschluss (23) verbindbar ist und auf eine erste Fläche (16a) des Kolbens selbst wirkt, und mindestens eine zweite Kammer (15b), die mit mindestens einem Antriebsspalt (18) in Verbindung steht, der mit einer Steuervorrichtung der Feststell- und/oder Notbremse des Zugfahrzeugs verbunden werden kann und auf eine zweite Fläche (17a) des Kolbens (16, 17) gegenüberliegend der ersten Fläche (16a) wirkt;
und dass sie mindestens eine Stange (19) umfasst, die zwischen dem Kolben (16, 17) und dem Antriebselement (14) angeordnet ist, wobei der Kolben (16, 17) in der Lage ist, das Antriebselement (14) mittels der Stange (19) aus seiner Ruhekonfiguration in die Antriebskonfiguration zu schieben, wenn die auf die erste Fläche (16a) wirkende Kraft größer ist als die auf die zweite Fläche (17a) wirkende.

2. Vorrichtung (1) nach Anspruch 1, **dadurch gekennzeichnet, dass** der mindestens eine Kolben (16, 17) beweglich ist zwischen einer stationären Konfiguration, wobei die auf die erste und zweite Fläche (16a, 17a) wirkenden Drücke im Wesentlichen null sind, einer regulären Betriebskonfiguration, wobei die auf die zweite Fläche (17a) wirkende Kraft größer ist als die auf die erste Fläche (16a) wirkende und sich der Kolben selbst in Bezug auf die stationäre Konfiguration von der Stange (19) weg bewegt, und einer Notfallkonfiguration, wobei die auf die erste Fläche (16a) wirkende Kraft größer ist als die auf die zweite Fläche (17a) wirkende und der Kolben selbst das Antriebselement (14) mittels der Stange (19) in eine Antriebsposition drückt.

3. Vorrichtung (1) nach Anspruch 1 oder 2, **dadurch gekennzeichnet, dass** die zweite Kammer (15b) zwischen der ersten Kammer (15a) und der Antriebskammer (12) angeordnet ist und dass die Stange (19) zwischen der zweiten Fläche (17a) und dem Antriebselement (14) angeordnet ist.

4. Vorrichtung (1) nach einem oder mehreren der vorhergehenden Ansprüche, **dadurch gekennzeichnet, dass** die erste Fläche (16a) einen anderen Bereich als die zweite Fläche (17a) aufweist.

5. Vorrichtung (1) nach einem oder mehreren der vorstehenden Ansprüche, **dadurch gekennzeichnet, dass** sie elastische Rückkehrmittel umfasst, die auf die zweite Fläche (17a) wirken und den Kolben (16, 17) von der Stange (19) wegdrücken können.

6. Vorrichtung (1) nach einem oder mehreren der Ansprüche 1 bis 3 und Anspruch 5, **dadurch gekennzeichnet, dass** der Bereich der ersten Fläche (16a) im Wesentlichen dem Bereich der zweiten Fläche (17a) entspricht.

7. Vorrichtung (1) nach Anspruch 6, **dadurch gekennzeichnet, dass** die vom Kolben (16, 17) in der stationären Konfiguration eingenommene Position im Wesentlichen der in der regulären Betriebskonfiguration eingenommenen entspricht.

8. Vorrichtung (1) nach einem oder mehreren der vorstehenden Ansprüche, **dadurch gekennzeichnet, dass** die Stange (19) mit dem Kolben (16, 17) verbunden ist.

9. Vorrichtung (1) nach einem oder mehreren der vorhergehenden Ansprüche, **dadurch gekennzeichnet, dass** der mindestens eine Kolben (16, 17) mindestens einen ersten Kolben (16), der die erste Fläche (16a) definiert, und mindestens einen zweiten Kolben (17), der die zweite Fläche (17a) definiert, umfasst, wobei der erste und zweite Kolben (16, 17) unterschiedlich und der eine an dem anderen anliegend angeordnet sind.

10. Vorrichtung (1) nach Anspruch 5, **dadurch gekennzeichnet, dass** sie mindestens eine weitere Kammer (15c) umfasst, die zwischen der ersten und der zweiten Kammer (15a, 15b) angeordnet ist und mit einem Auslasstank (24) in Verbindung steht.

## Revendications

1. Dispositif d'actionnement (1) d'une soupape (40) pour le freinage d'une remorque du type comprenant un corps de base (2) ayant au moins un siège principal (3) communiquant avec au moins un orifice principal (4) et un orifice secondaire (23) pouvant être raccordés à une source d'un fluide actif à un premier et à un second signal de pression respectivement ; un orifice d'évacuation (5) pouvant être raccordé à un réservoir d'évacuation ; un orifice de commande (6) communiquant avec une conduite de commande (7) pouvant être raccordé au système de freinage du véhicule de remorquage ; un orifice supplémentaire (25) communiquant avec une conduite supplémentaire (26) pouvant être raccordée au frein automatique et/ou de stationnement de la remorque ; à l'intérieur dudit siège principal (3) étant logé coulissant au moins un distributeur (9) mobile entre au moins une position de repos et au moins une position de freinage ; **caractérisé en ce qu'**il comprend au moins un corps d'entraînement (11) dans lequel sont définis :
- au moins une chambre d'entraînement (12) ayant au moins un écartement de freinage (13) pouvant être raccordé au système de freinage d'un véhicule de remorquage et à l'intérieur duquel est logé coulissant au moins un élément d'entraînement (14) mobile entre une configuration de repos et une configuration d'entraînement dans laquelle il interagit avec ledit distributeur (9) pour le déplacer de la position de repos à celle de freinage ;
- au moins un siège d'actionnement (15) à l'intérieur duquel est logé coulissant de façon étanche au moins un piston (16, 17) délimitant au moins une première chambre (15a), communiquant avec au moins un écartement supplémentaire (20) pouvant être raccordé audit orifice secondaire (23) et agissant sur une première face (16a) du piston lui-même, et au moins une seconde chambre (15b), communiquant avec au moins un écartement d'entraînement (18) pouvant être raccordé à un dispositif de commande du frein de stationnement et/ou d'urgence du véhicule de remorquage et agissant sur une seconde face (17a) dudit piston (16, 17) opposée à ladite première face (16a) ;
et **en ce qu'**il comprend au moins une bielle (19) placée entre ledit piston (16, 17) et ledit élément d'entraînement (14), ledit piston (16, 17) étant capable de pousser ledit élément d'entraînement (14) de sa configuration de repos à la configuration d'entraînement au moyen de ladite bielle (19) lorsque la force agissant sur ladite première face (16a) est supérieure à celle agissant sur ladite seconde face (17a).

2. Dispositif (1) selon la revendication 1, **caractérisé en ce que** ledit au moins un piston (16, 17) est mobile entre une configuration immobile, dans laquelle les pressions agissant sur lesdites première et seconde faces (16a, 17a) sont sensiblement nulles, une configuration de fonctionnement régulier, dans laquelle la force agissant sur ladite seconde face (17a) est supérieure à celle agissant sur ladite première face (16a) et le piston lui-même s'éloigne de ladite bielle (19) par rapport à la configuration immobile, et une configuration d'urgence, dans laquelle la force agissant sur ladite première face (16a) est supérieure à celle agissant sur ladite seconde face (17a) et le piston lui-même pousse ledit élément d'entraînement (14) vers une position d'entraînement au moyen de ladite bielle (19).

3. Dispositif (1) selon la revendication 1 ou 2, **caractérisé en ce que** ladite seconde chambre (15b) est placée entre ladite première chambre (15a) et ladite chambre d'entraînement (12) et **en ce que** ladite bielle (19) est placée entre ladite seconde face (17a) et ledit élément d'entraînement (14).

4. Dispositif (1) selon une ou plusieurs des revendications précédentes, **caractérisé en ce que** ladite première face (16a) a une aire différente de ladite seconde face (17a).

5. Dispositif (1) selon une ou plusieurs des revendications précédentes, **caractérisé en ce qu'**il comprend un moyen de retour élastique agissant sur ladite seconde face (17a) et capable de pousser ledit piston (16, 17) en éloignement de ladite bielle (19).

6. Dispositif (1) selon une ou plusieurs des revendications 1 à 3 et la revendication 5, **caractérisé en ce que** l'aire de ladite première face (16a) correspond sensiblement à l'aire de ladite seconde face (17a).

7. Dispositif (1) selon la revendication 6, **caractérisé en ce que** la position prise par ledit piston (16, 17) dans ladite configuration immobile correspond sensiblement à celle prise dans ladite configuration de fonctionnement régulier.

8. Dispositif (1) selon une ou plusieurs des revendications précédentes, **caractérisé en ce que** ladite bielle (19) est liée audit piston (16, 17).

9. Dispositif (1) selon une ou plusieurs des revendications précédentes, **caractérisé en ce que** ledit au moins un piston (16, 17) comprend au moins un premier piston (16) définissant ladite première face (16a) et au moins un second piston (17) définissant ladite seconde face (17a), lesdits premier et second pistons (16, 17) étant distincts et agencés reposant l'un contre l'autre.

10. Dispositif (1) selon la revendication 5, **caractérisé en ce qu'**il comprend au moins une chambre supplémentaire (15c), placée entre ladite première et ladite seconde chambre (15a, 15b) et communiquant avec un réservoir d'évacuation (24).
